# EUROPÄISCHE PATENTANMELDUNG

(11) **EP 1 157 823 A2**
(43) Veröffentlichungstag der Anmeldung: **28.11.2001**
(21) Anmeldenummer: 01111129.1
(22) Anmeldetag: 09.05.2001
(51) Int. Cl.: B32B 27/08, F16L 59/00, E04B 1/80

(54) **Folienlaminate aus beidseitig metallisierten Polymerfolien sowie deren Verwendung als Hochbarrierefolie in Vakuumisolierpaneelen**

(30) Priorität: 22.05.2000 DE 10025305
(71) Anmelder: Wolff Walsrode AG, 29655 Walsrode (DE)
(72) Erfinder: Jacobsen, Sven, 29683 Fallingbostel (DE); Kuckertz, Christian, Dr., 57462 Olpe (DE); Brandt, Rainer, Dr., 29664 Walsrode (DE)
(74) Vertreter: Kutzenberger, Helga, Dr.

(57) **Zusammenfassung**

Beschrieben wird ein mehrschichtiges Folienlaminat, umfassend mindestens 3 Schichten mit folgender Schichtenfolge:
(I) eine einseitig mit Aluminium oder SiOx oder einem Metalloxid der 2. oder 3. Hauptgruppe bedampfte Folienschicht,
(II) eine beidseitig mit Aluminium oder SiOx oder einem Metalloxid der 2. oder 3. Hauptgruppe bedampfte Folienschicht,
(III) eine Polyolefin-Heißsiegelschicht.

Ebenfalls beschrieben wird die Verwendung dieser Folienlaminate als Hochbarrierefolien, insbesondere in Vakuumisolierpaneelen.

## Beschreibung

Die vorliegende Erfindung betrifft Folienlaminate die als Hochbarrierefolien besonders gasdiffusionsdicht sind und die Verwendung dieser gasdiffusionsdichten Folienlaminate in der Herstellung von Vakuum Isolations Paneelen.

In einigen speziellen technischen Produkten wie zum Beispiel in der Herstellung von Vakuum Isolations Paneelen (VIP) sind Folien erforderlich, die äußerst geringe Gasdiffusionswerte besitzen, um dabei im Beispiel der VIP zu garantieren, dass das einmal angelegte Vakuum und damit die Funktionsfähigkeit der VIP über einen sehr langen Zeitraum ( 10-15 Jahre) erhalten bleiben.

Unter Vakuumisolationspaneelen (VIP) versteht man dabei plattenförmige Gebilde, die aus einem Dämm- oder Füllstoff bestehen und von einer Hochbarrierefolie vakuumverpackt umhüllt sind. Die Art und insbesondere die Höhe des Vakuums sind dabei von dem verwendeten Dämm- oder Füllstoff und der verlangten Isolationswirkung des VIP abhängig. Die Hochbarrierefolie verhindert dabei über die Lebensdauer des VIP die Diffusion von Gasen, die das Vakuum und damit die Isolationswerte des VIP verschlechtern. Metallfolien sind dabei als Hochbarrierefolien unerwünscht, da diese über die Kanten des plattenförmigen VIP Wärme leiten und damit die Isolationsleistung verringern.

Übliche Sperrschichtfolien aus Kunststoffen, wie beispielsweise in der EP-A-0 517 026 beschreibt, erreichen nicht die erforderliche Gassperrwirkung. Verbunde die eine Aluminiumfolie enthalten, besitzen zwar eine totale Gassperre, aber sind in vielen Anwendungen bedingt durch die Wärmeleitfähigkeit des Aluminiums nicht erwünscht. Darüberhinaus sind metallisierte oder mit SiOx bedampfte Folien bekannt, die die Nachteile bezüglich der Wärmeleitfähigkeit der reinen Metallfolien umgehen (wie zum Beispiel in der EP-A-0 878 298 beschrieben), gleichzeitig höhere Sperrwirkungen als reine Kunststofffolien erzielen, dabei aber ebenfalls weit von den geforderten Gassperrwerten entfernt sind.

Aufgabe der vorliegenden Erfindung war es daher, Folienlaminate bereitzustellen, die eine besonders hohe Gassperrwirkung erzielen, ohne dabei wärmeleitende Metallfolien als Komponenten einzusetzen. Dabei sollten gleichzeitig durch geeignete Kombination von Materialien weitere mechanische und thermische Eigenschaften des Folienlaminats positiv beeinflusst werden. Insbesondere sollen Folienlaminate zur Verfügung gestellt werden, die zur Herstellung von Vakuumisolationspaneelen (VIP) geeignet sind.

Erfindungsgemäß gelingt dies durch ein mehrschichtiges Folienlaminat mit mindestens 3 Schichten mit folgender Schichtenfolge:
(I) Einseitig mit Aluminium oder SiOx oder einem Metalloxid der 2. oder 3. Hauptgruppe bedampfte Folienschicht, wobei die bedampfte Schicht innen liegend ist.
(II) Beidseitig mit Aluminium oder SiOx oder einem Metalloxid der 2. oder 3. Hauptgruppe bedampfte Folienschicht.
(III) Heißsiegelschicht als Siegelmedium.

Hierbei würde man zunächst erwarten, daß die Gassperrwirkung durch die Gassperrwirkung der besten der Einzelfolien gegeben ist, bzw. sich aus der Summation der Sperrwirkungen der Einzelfolien errechnet, jedoch erhält man überraschenderweise Gassperrwirkungen, die nicht nur deutlich höher als die der Einzelfolien liegen, sondern sogar teils deutlich höher als die der Summe der Einzelfolien liegen. Dies kann zum Beispiel durch eine synergistische Fehlerabdeckungen der einzelnen metallisierten Schichten, die bei der Kaschierung der unterschiedlichen Lagen (I) und (II) aufeinander liegen, erklärt werden.

Um noch weiter gesteigerte Gasdiffusionssperrwerte zu erhalten können gegebenenfalls zwischen die Schichten (II) und (III) oder den Schichten (I) und (II) noch weitere Schichten (IIa, IIb,...) eingefügt werden, die ebenfalls ein- oder beidseitig mit Aluminium oder SiOx oder einem Metalloxid der 2. oder 3. Hauptgruppe bedampftes Material enthalten.

Die mit Aluminium oder SiOx oder einem Metalloxid der 2. oder 3. Hauptgruppe bedampften Schichten können dabei aus allen üblichen Kunststoffen bestehen, insbesondere aber auch aus Polyestern, Polyamiden, Polyolefinen oder deren Copolymeren. Weiterhin können diese Schichten auch aus coextrudierten Lagen unterschiedlicher Polymere bestehen. Die Dicke der einzelnen Schichten ist dabei nicht wesentlich, wird aber zu einem kleinen Anteil die Gassperrwirkung beeinflussen, zum anderen die mechnischen und thermischen Eigenschaften des Folienlaminats mitbestimmen.

Mit diesen erfindungsgemäßen Folienlaminaten lassen sich insbesondere Sauerstoffdiffusionswerte kleiner 0,01 cm³/m² d bar (23°C, 75 % r.h.) und Wasserdampfdiffusionswerte kleiner 0,1 g/m² d (38°C, 90 % r.h.) erreichen. Dabei sind mit Laminaten mit mehr als 3 Schichten durchaus auch Folienlaminate zu erhalten, die diese Werte noch deutlich unterschreiten. Durch die Kombination der unterschiedlichen Lagen lassen sich dabei nicht nur die Gasdiffusionswerte auf die von der Anwendung erforderlichen Werte einstellen, darüberhinaus ist es möglich durch Modifikation des Schichtmaterials das mit Aluminium oder SiOx oder einem Metalloxid der 2. oder 3. Hauptgruppe bedampft ist, die mechanischen und/oder thermischen Kennwerte des resultierenden erfindungsgemäßen Laminats zu variieren.

Bevorzugt wird als außenliegende Schicht (I) ein mit Aluminium oder SiOx oder einem Metalloxid der 2. oder 3. Hauptgruppe bedampftes Polyamid gewählt, zeichnet sich das entstehende Folienlaminat zusätzlich zu den guten Gasdissusionssperrwerten durch eine hohe mechanische Stabilität, insbesondere durch eine hohe Durchstichfestigkeit aus, die in der Handhabung der erfindungsgemäßen Folienlaminate Vorteile bietet und damit Beschädigungen der Laminate und daraus hergestellter VIP verhindert. Solche VIP müssen sowohl bei der Herstellung als auch beim Einbau in die Endapplikation teilweise große mechnische Belastungen aushalten, die zu einer Beschädigung der Folie und damit der Barriereeigenschaften führen können.

In einer weiteren bevorzugten Ausgestaltung wird als außenliegende Schicht (I) ein mit Aluminium oder SiOx oder einem Metalloxid der 2. oder 3. Hauptgruppe bedampftes Polypropylen gewählt, das sich durch eine besonders gute Wasserdampfsperre auszeichnet. Wird diese außenliegende Schicht nun mit einer Fölgeschicht (II) kombiniert die aus einem beidseitig mit Aluminium oder SiOx oder einem Metalloxid der 2. oder 3. Hauptgruppe bedampften Polyester besteht, der sich seinerseits durch eine besonders gute Sauerstoffsperre auszeichnet, wird das daraus gebildete erfindungsgemäße Folienlaminat sich sowohl durch eine bessere Wasserdampfsperre im Vergleich zur einzelnen Polypropylenschicht, als auch durch eine bessere Sauerstoffsperre im Vergleich zur einzelnen Polyesterschicht auszeichnen, womit beide entscheidenden Barriereelemente in besonders überzeugender Weise sich nicht nur ergänzen sondern synergistisch verstärken.

In einem weiteren speziellen Fall ist eine oder mehrere der mit Aluminium oder SiOx oder einem Metalloxid der 2. oder 3, Hauptgruppe bedampften Schichten (I,II) eine coextrudierte Schicht, in der diese coextrudierte Schicht aus mindestens einer Lage Polyamid (a) und mindestens einer Gasbarrierelage (b) aufgebaut ist. Insbesondere anzustreben ist eine 3-lagige Kombination aus Polyamid in den Außenlagen und EVOH als Gasbarriereschicht in der Innenlage. Die Gasbarrierelage sorgt dabei im resultierenden erfindungsgemäßen Folienlaminat für extrem verbesserte Gassperrwerte, bei der Verwendung von EVOH als Gassperrlage insbesondere zu verbesserten Sauerstoffsperrwerten.

In einem besonders bevorzugten Aufbau sind eine oder mehrere der Schichten (I,II) mit Aluminium, vorzugsweise in einer Dicke von 30 bis 80 nm, bedampft.

Als Heißsiegelschicht (III) können Polyolefin Homo- oder Polyolefin Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomer (IO) und Mischungen dieser Stoffe, weiterhin denkbar ist amorphes Polyethylenterephthalat (aPET) oder andere siegelfähige Polymermaterialien. Erfindungsgemäß möglich ist auch eine mehrschichtige, durch Coextrusion mehrerer Schichten aus den genannten Materialien hergestellte Ausführungsform der Heißsiegelschicht (III). Die Dicke der Heißsiegelschicht (III) beträgt vorzugsweise 20 bis 200µm, besonders bevorzugt 50 bis 100µm.

Insbesondere kommen bei der Produktion von VIP lonomersiegelschichten oder andere leichtfließende Siegelschichten zum Einsatz, die unter den typischen staubigen Produktionsbedingungen bei der VIP Herstellung zu besonders Gasdichten Siegelnähten führen.

Als Klebe- und Verbindungsschicht zwischen den einzelnen Schichten kommen vorzugsweise handelsübliche Reaktivklebstoffe wie insbesondere Zwei-Komponenten-Polyurethanklebstoffe zum Einsatz. Es können aber auch polyolefinische Haftvermittler, vorzugsweisePolyethylen-Homopolymer, Ethylenethylacrylat (EEA) oder Ethylenmethacrylsäure (EMA) eingesetzt werden. Jedoch ist das erfindungsgemäße Folienlaminat und insbesondere seine Gassperrwirkung nicht wesentlich von der Art der Verbindung der einzelnen Schichten abhängig.

Hierbei ist insbesondere bei den Zwei-Komponenten-Polyurethanklebstoffen darauf zu achten, dass die Komponentenzusammensetzung so gewählt wird, dass eine möglichst geringe Gasbildung stattfindet. Ansonsten kann dies zur Bildung von Gasblasen in den Verbindungsschichten führen.

Das erfindungsgemäße Folienlaminat kann dabei auf der Außenseite bedruckt sein.

In einer besonderen Ausprägung der Erfindung ist die außenliegende Schicht (I) nicht bedampft sondern auf der innenliegende Seite bedruckt, sodaß dieses Druckbild von außen sichtbar ist.

Ein weiterer Gegenstand der Erfindung ist die Verwendung der erfindungsgemäßen Folien als Hochbarriereverfahren, in Vakuumisolierpaneelen.

Im Folgenden sind beispielhafte Folienaufbauten wiedergegeben, die die erfindungsgemäßen Folienlaminate näher beschreiben sollen. Diese Beispiele sind jedoch nicht vollständig und sollen die erfindungsgemäßen Folienlaminate nicht einschränken.

### Beispiele

A)
   (I) mit Aluminium bedampftes Polyamid, bedampfte Seite zu (II) gewandt
   (II) beidseitig mit Aluminium bedampfter Polyester
   (III) Polyethylen-Siegelschicht
B)
   (I) mit Aluminium bedampfter Polyester, bedampfte Seite zu (II) gewandt
   (II) Beidseitig mit Aluminium bedampfter Polyester
   (III) Polyethylen-Siegelschicht
C)
   (I) mit Aluminium bedampftes Polypropylen, bedampfte Seite zu (II) gewandt
   (II) beidseitig mit Aluminium bedampfter Polyester
   (III) Polyethylen-Siegelschicht
D)
   (I) mit Aluminium bedampftes Polyamid, bedampfte Seite zu (II) gewandt
   (II) beidseitig mit Aluminium bedampftes Polypropylen
   (III) Ionomer-Siegelschicht
E)
   (I) mit Aluminium bedampftes Coextrudat aus Polyamid/EVOH/Polyamid, bedampfte Seite zu (II)
   (II) beidseitig mit Aluminium bedampfter Polyester
   (IIa) beidseitig mit Aluminium bedampfter Polyester
   (III) amorphe Polyethylenterephthalat-Siegelschicht
F)
   (I) mit Aluminium bedampftes Polyamid, bedampfte Seite zu (II) gewandt
   (II) beidseitig mit Aluminium bedampfter Polyester
   (IIa) beidseitig mit Aluminium bedampfter Polyester
   (IIb) beidseitig mit Aluminium bedampfter Polyester
   (III) Polypropylen-Siegelschicht
G)
   (I) mit SiOx bedampftes Polyamid, bedampfte Seite zu (II) gewandt
   (II) beidseitig mit SiOx bedampfter Polyester
   (III) Ionomer-Siegelschicht
H)
   (I) mit SiOx bedampftes Polypropylen, bedampfte Seite zu (II) gewandt
   (II) beidseitig mit Aluminium bedampfter Polyester
   (III) Polyethylen-Siegelschicht

## Patentansprüche

1. Mehrschichtiges Folienlaminat, umfassend mindestens 3 Schichten mit folgender Schichtenfolge:
(I) eine einseitig mit Aluminium oder SiOx oder einem Metalloxid der 2. oder 3. Hauptgruppe bedampfte Folienschicht,
(II) eine beidseitig mit Aluminium oder SiOx oder einem Metalloxid der 2. oder 3. Hauptgruppe bedampfte Folienschicht,
(III) eine Heißsiegelschicht.

2. Mehrschichtiges Folienlaminat nach Anspruch 1, wobei zwischen den Schichten (II) und (III) oder aber zwischen den Schichten (I) und (II) zusätzliche ein- oder beidseitig mit Aluminium oder SiOx oder einem Metalloxid der 2. oder 3. Hauptgruppe bedampfte Schichten (IIa,IIb,..), oder aber nicht bedampfte Gasbarriere- oder Funktionsschichten eingefügt sind.

3. Mehrschichtiges Folienlaminat nach Anspruch 1 oder 2, wobei die außen liegende Schicht (I) ein mit Aluminium oder SiOx oder einem Metalloxid der 2. oder 3. Hauptgruppe bedampftes Polyamid ist.

4. Mehrschichtiges Folienlaminat nach Anspruch 1 oder 2, wobei die außen liegende Schicht (I) ein mit Aluminium oder SiOx oder einem Metalloxid der 2. oder 3. Hauptgruppe bedampftes Polypropylen ist.

5. Mehrschichtiges Folienlaminat nach Anspruch loder 2, wobei mindestens eine der bedampften Schichten eine mit Aluminium oder SiOx oder einem Metalloxid der 2. oder 3. Hauptgruppe bedampfte coextrudierte Schicht ist, in der diese coextrudierte Schicht aus mindestens einer Lage Polyamid (a) und mindestens einer Gasbarrierelage (b) (z.B. EVOH) aufgebaut ist.

6. Mehrschichtiges Folienlaminat nach einem der vorhergehenden Ansprüche, wobei die einzelnen Schichten mittels Zwei-Komponenten-Polyurethanklebstoffen laminiert werden, wobei insbesondere das Verhältnis der Klebstoffkomponenten so gewählt wird, daß bei der Klebstoffaushärtung die entstehenden Gasmengen minimiert werden.

7. Mehrschichtiges Folienlaminat nach einem der vorhergehenden Ansprüche, wobei es sich bei den bedampften Schichten um Schichten handelt, die mit Aluminium, vorzugsweise in einer Dicke von 30 bis 80 nm, bedampft sind.

8. Mehrschichtiges Folienlaminat nach einem der vorhergehenden Ansprüche, wobei die außenliegende Schicht (I) bedruckt ist.

9. Verwendung des mehrschichtigen Folienlaminats gemäß einem der vorhergehenden Ansprüche als Hochbarrierefolie in Vakuumisolationspaneelen.
